**Europäisches Patentamt**

**European Patent Office**

**Office européen des brevets**

(19)

(11) Veröffentlichungsnummer: **0 277 479**
**B1**

(12) **EUROPÄISCHE PATENTSCHRIFT**

(45) Veröffentlichungstag der Patentschrift:
**13.06.90**

(51) Int. Cl.⁵: $B64C\ 13/32$

(21) Anmeldenummer: **88100092.1**

(22) Anmeldetag: **07.01.88**

(54) **Stelleinrichtung für Tragflächenklappen von Flugzeugen.**

(30) Priorität: **27.01.87 DE 3702294**

(43) Veröffentlichungstag der Anmeldung:
**10.08.88 Patentblatt 88/32**

(45) Bekanntmachung des Hinweises auf die Patenterteilung:
**13.06.90 Patentblatt 90/24**

(84) Benannte Vertragsstaaten:
**FR GB**

(56) Entgegenhaltungen:
**US-A- 4 533 096**

(73) Patentinhaber: **Messerschmitt-Bölkow-Blohm Gesellschaft mit beschränkter Haftung, Robert-Koch-Strasse, D-8012 Ottobrunn(DE)**

(72) Erfinder: **Stache, Ernst, Streitheide 18, D-2803 Weyhe(DE)**

## Beschreibung

Die Erfindung betrifft eine Stelleinrichtung für Tragflächenklappen von Flugzeugen, gemäß dem Oberbegriff von Anspruch 1, wie sie z.B. durch die DE-A 3 114 143 bekannt ist. Es ist bekannt, daß sich an Tragflächen von Flugzeugen mit variabler Flügelgeometrie im Reiseflugzustand im Bereich der Landeklappen Spalte bilden, die unerwünschte strömungsmechanische Effekte an den Tragflächen hervorrufen. Diese Spalte lassen sich mit geeigneten Tragflächenklappen ("Deflector Doors") abdecken (DE-A 3 114 143). Da der zwischen Landeklappenvorderseite und Flügelhinterseite entstehende Spalt in unterschiedlichen Ein- und Ausfahrstellungen verschiedene Formen einnimmt, wird zur Betätigung der Tragflächenklappen eine Stelleinrichtung benötigt, die den entstehenden Spalt in jeder Landeklappenstellung abdeckt.

Aufgabe der Erfindung ist es daher, eine Stelleinrichtung vorzustellen, welche die Tragflächenklappen in Abhängigkeit von der Landeklappenposition im Sinne einer Spaltabdeckung bewegt.

Die erfinderische Lösung dieser Aufgabe ergibt sich aus den Merkmalen des Hauptanspruches. Vorteilhafte Ausgestaltungen und Weiterbildungen sind dem Unteranspruch zu entnehmen.

Von besonderer Bedeutung für den Lösungsgedanken der Erfindung ist die Verwendung von nur einem Lenkgetriebe pro Tragflügelseite und die Nutzung von Kniehebeln, sowie von Zug-Druckstangen zur Betätigung der Tragflächenklappen anstelle von Antriebswellen, die aufgrund von Torsionskräften keine synchrone Bewegung der Tragflügelklappen erlauben. Zudem ist durch die Nutzung von Kurvenscheiben im Lenkgetriebe die Positionierung der Tragflächenklappen mit der Positionierung der Landeklappen synchronisierbar.

Die Erfindung wird mit Hilfe der Zeichnung erläutert. Es zeigen:

Fig. 1 eine Anordnung von Lenkgetriebe, Zug-Druckstangen, Tragflächenklappen und Verkleidungskörpern für die Landeklappenstelleinrichtungen im Bereich des Tragflügelhinterholms,
Fig. 2 einen Schnitt A–A gemäß Fig. 1,
Fig. 3 das Lenkgetriebe gemäß Fig. 1

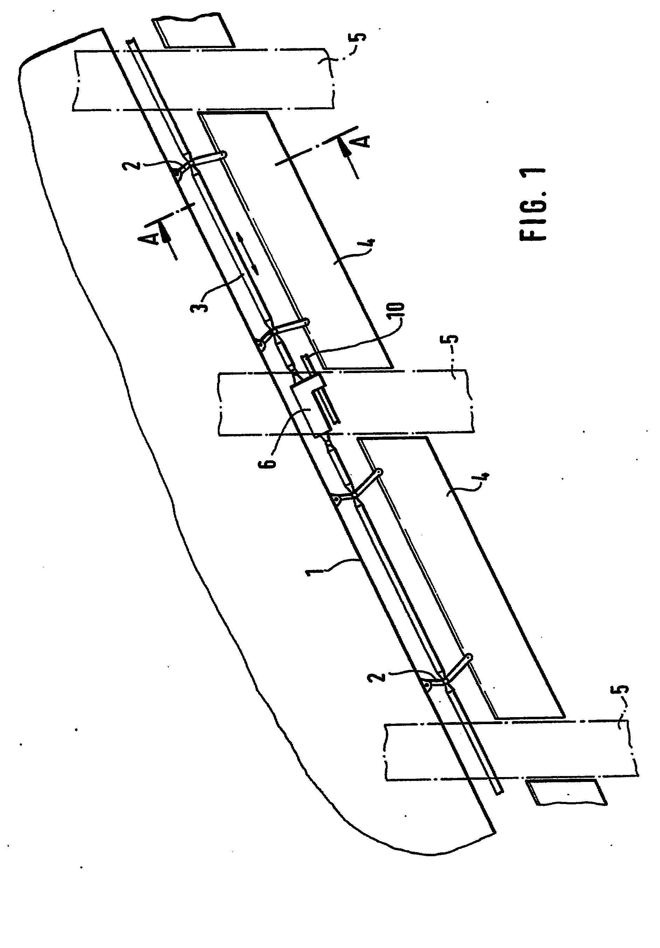

In Fig. 1 ist in einem Ausführungsbeispiel dargestellt, wie ein Lenkgetriebe 6 über eine Torsionswelle 10, die auch ein hier nicht dargestelltes Landeklappenstellsystem betätigt, angetrieben wird. Dieses Lenkgetriebe 6 wandelt die Rotationsbewegung der Anstriebswelle 10 in Zug- und Druckkräfte um, die auf rechts- und linksseitig an diesem Getriebe angelenkte Zug-Druckstangen 3 übertragen werden. Die Zug-Druckstangen sind an Kniehebeln 2 angelenkt, die ihrerseits am Tragflügelhinterholm 1 und an Tragflächenklappen 4 befestigt sind. Die Anordnung der Kniegelenke 2 erfolgt dabei derart, daß die Zug-Druckstangen 3 durch die auf die Tragflächenklappen 4 wirkenden aerodynamischen Lasten bei Zug stärker belastet sind als bei Druck. Die von der Torsionswelle 10 über das Lenkgetriebe 6 ausgelöste Schub- und Zugbewegung bewirkt eine mit der Landeklappen-Positionierungsbewegung synchronisierte Verstellung der Tragflächenklappen 4 derart, daß die im Reiseflug entstehenden Spalte zwischen Tragflächenhinterseite und Landeklappenvorderseiten abgedeckt werden.

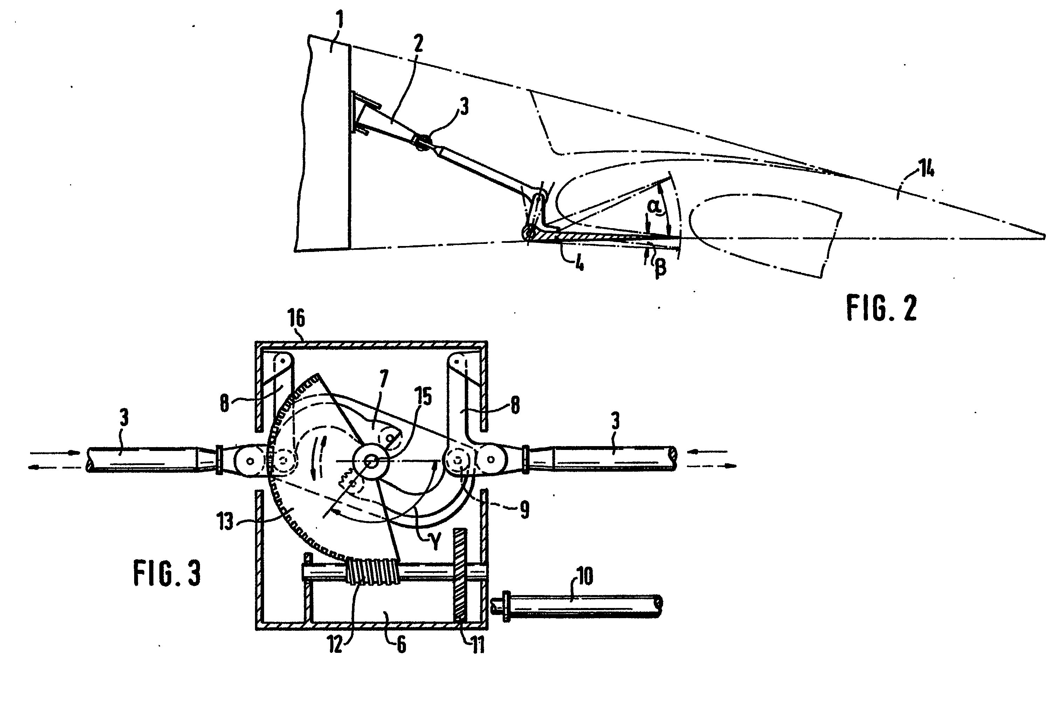

Mit Hilfe von Fig. 2, die einen Schnitt A–A gemäß Fig. 1 darstellt, wird deutlich, daß sich die Tragflächenklappen 4 mit den Zug-Druckstangen 3 um die Winkel α und β um eine horizontale Drehachse auslenken lassen. Da die Betätigungseinrichtung für die Tragflächenklappen 4 mit der Stelleinrichtung für die Landeklappen gekoppelt ist, bewirkt eine Veränderung der Position der Landeklappen 14 eine synchrone Auslenkung der Tragflächenklappen 4 um die genannten Winkel.

Fig. 3 zeigt in teilweise geschnittener Ansicht ein Lenkgetriebe 6 der Stelleinrichtung für die Tragflächenklappen 4. Hier wird die von der Torsionswelle 10 zugeführte Antriebsenergie von einer Reduziergetriebe-Schnecken-Anordnung 11, 12 aufgenommen, und mit Hilfe einer um den Winkel γ drehbar gelagerten Zahnsegmentscheibe 13, einer Kurvenscheibe 7 und eine Kurvenrollen 9 aufweisende Lenkhebels 8 in eine Zug- und Schubbewegung umgewandelt, die auf die an den Lenkhebeln 8 angelenkten Zug-Druckstangen 3 wirkt. Diese lösen über die Kniegelenke 2 die Positionierung der Tragflächenklappen 4 aus.

Gemäß der Erfindung sind die Zahnsegmentscheibe 13 und die Kurvenscheibe 7 verdrehsicher auf einer Welle 15 montiert, und die Lenkhebel 8 mit je einem Paar von Kurvenrollen 9 versehen. Die Kurvenscheibe 7 sorgt in dieser Anordnung dafür, daß die rechts- und linksseitig von dem Lenkgetriebe 6 befindlichen Zug-Druckstangen 3 in jeweils entgegengesetzter Richtung bewegt werden, wodurch die Welle 15 entlastet wird. Zudem sind die Kurvenbahnen der Kurvenscheibe 7 so geformt, daß die Auslenkwinkel α und β, sowie ein zeitweiliger Stillstand in der Ausfahrbewegung der Tragflügelklappen 4 erzielbar sind.

Ein besonderer Vorteil der Erfindung ist, daß durch die Verwendung von Zug-Druckstangen 3 eine synchrone Positionierung der Tragflächenklappen 4 erreicht wird. Im Gegensatz dazu erlauben Antriebswellen gleicher Abmessungen keine torsionslose Übertragung der Stellkräfte.

## Patentansprüche

1. Stelleinrichtung für Tragflächenklappen von Flugzeugen mit Tragflächen variabler Flügelgeometrie, bei denen die Betätigung der Tragflächenklappen (4), in Abhängigkeit von der Positionierung der Landeklappen (14) erfolgt, um einen zwischen Flügelhinterteil und Landeklappenvorderteil entstehenden Spalt abzudecken, dadurch gekennzeichnet, daß ein Lenkgetriebe (6) für den Tragflächenklappenantrieb von einer Torsionswelle (10) angetrieben wird, die für den Antrieb der Landeklappenstellsysteme sorgt, daß im Lenkgetriebe (6) über eine Reduziergetriebe-Schnecken-Anordnung (11, 12) eine Zahnsegmentscheibe (13) angetrieben wird, die mit einer Kurvenscheibe (7) auf einer Welle (15) verdrehsicher verbunden ist und auf dieser um einen

Winkel $\gamma$ drehbar gelagert ist, daß die Kurvenscheibe (7) über zwei Kurvenbahnen verfügt, in denen jeweils ein mit Kurvenrollen (9) versehener Lenkhebel (8) beweglich angeordnet ist, wobei die Lenkhebel (8) mit dem Lenkgetriebe-Gehäuse (16), sowie mit je einer Zug-Druckstange (3) gelenkig verbunden sind, daß die Kurvenbahnen der Kurvenscheibe (7) derart geformt sind, daß die rechts- und linksseitig vom Lenkgetriebe (6) befindlichen Zug-Druckstangen (3) beim Antrieb der Zahnsegmentscheibe jeweils in entgegengesetzter Richtung betätigt werden, daß die Zug-Druckstangen (3) zu wenigstens zwei Kniegelenken (2) pro Tragflächenklappe (4) führen, daß die Kniegelenke (2) am Flügelhinterholm (1) und an den Tragflächenklappen (4) befestigt sind, daß die Kniegelenke (2) derart angeordnet sind, daß die Zug-Druckstangen (3) durch die auf die Tragflächenklappen (4) wirkenden aerodynamischen Lasten bei Zug stärker belastet sind als bei Druck und daß durch die Betätigung der Stelleinrichtung die Tragflächenklappen (4) (Winkel $\alpha$ bzw. $\beta$) aus einer Null-Lage in entgegengesetzte Richtungen auslenkbar sind.

2. Stelleinrichtung gemäß Anspruch 1, dadurch gekennzeichnet, daß die Lenkhebel (8) über je ein Paar von Kurvenrollen (9) verfügen.

**Revendications**

1. Dispositif de manœuvre pour volets de voilure d'avion, avec des voilures à géométrie d'aile variable, dans lesquelles l'actionnement des volets de voilure (4) s'effectue en fonction du positionnement des volets d'atterrissage (14), pour recouvrir une fente apparaissant entre la partie arrière de l'aile et la partie avant du volet d'atterrissage, caractérisé en ce qu'un mécanisme de direction (6) pour l'entraînement des volets de voilure est entraîné par un arbre de torsion (10) qui veille à l'entraînement des systèmes de positionnement des volets d'atterrissage, en ce que, dans le mécanisme de direction (6), un disque à segment denté (13) est entraîné, par l'intermédiaire d'un dispositif réducteur de vitesse à vis sans fin, et relié à rotation à un disque à came (7) sur un arbre (15) et monté tournant d'un angle $\gamma$ sur cet arbre, en ce que le disque à came (7) comporte deux pistes de came, dans lesquelles chaque fois un levier d'orientation (8) pourvu de galets de came (9) est disposé mobile, les leviers d'orientation (8) étant reliés de manière articulée au carter de transmission d'orientation (16) ainsi qu'à une tige de traction-compression (3), en ce que les pistes à came du disque à came (7) sont formées de façon que, lors de l'entraînement du disque à segment denté, les tiges de traction-compression (3) se trouvant du côté droit et du côté gauche du mécanisme de direction (6), soient chaque fois actionnées en direction opposée, en ce que les tiges de traction-compression (3) mènent à au moins deux genouillères (2) par volet de voilure (4), en ce que les genouillères (2) sont fixées sur le longeron arrière d'aile (1) et sur les volets de voilure (4), en ce que les genouillères (2) sont disposées de telle façon que les tiges de traction-compression (3) sont sollicitées plus fortement en traction qu'en compression par les efforts aérodynamiques agissant sur les volets de voilure (4) et en ce que, du fait de l'actionnement du dispositif de manœuvre, les volets de voilure (4) sont orientables dans des directions opposées (angle $\alpha$ ou $\beta$) à partir d'une position zéro.

2. Dispositif de manœuvre selon la revendication 1, caractérisé en ce que les leviers d'orientation (8) comportent chacun deux galets à came (9).

**Claims**

1. Adjusting device for wing flaps of aircraft with flaps of variable wing geometry in which the operation of the wing flaps (4) takes place as a function of the positioning of the landing flaps (14) in order to cover a gap arising between wing rear part and landing flap front part, characterised in that a steering gear (6) for the wing flap drive is driven by a torsion shaft (10) which serves for the drive of the landing flap adjustment systems, that there is driven in the steering gear (6) via a reducing gear-worm arrangement (11, 12) a toothed segment wheel (13) which is connected rotationally rigid to a cam plate (7) on a shaft (15) and is supported rotatable on the latter by an angle $\gamma$ that the cam plate (7) disposes of two curved paths in each of which is movably arranged a steering lever (8) provided with cam rollers (9), the steering levers (8) being articulated with the steering gear housing (16) and with one tension-compression rod (3) each respectively, that the curved paths of the cam plate (7) are formed in such a way that the tension-compression rods (3) located on the right- and left-hand side of the steering gear (6) are on the driving of the toothed segment wheel actuated in respectively opposite directions, that the tension-compression rods (3) lead to at least two knuckle joints (2) per wing flap (4), that the knuckle joints (2) are fixed to the rear wing spar (1) and to the wing flaps (4), that the knuckle joints (2) are arranged in such a way that the tension-compression rods (3) are stressed by the aerodynamic loads acting on the wing flaps (4) more strongly under tension than under compression and that by the operation of the adjusting device the wing flaps (4) are swivellable out of a zero position in opposite directions (angle $\alpha$ or $\beta$).

2. Adjusting device according to claim 1, characterised in that the steering levers (8) each dispose of one pair of cam rollers (9).

FIG. 1

FIG. 2

FIG. 3